# EUROPEAN PATENT APPLICATION

(11) **EP 3 952 140 A1**
(43) Date of publication of application: **09.02.2022**
(21) Application number: 20778433.1
(22) Date of filing: 26.02.2020
(51) Int. Cl.: H04B 10/00, G02F 1/01, H04L 29/10

(54) **OPTICAL TRANSPONDER, AND METHOD FOR CONTROLLING SAME**

(30) Priority: 26.03.2019 JP 2019059075
(71) Applicant: NEC Corporation, 108-8001 Tokyo (JP)
(72) Inventor: NAKADA Tatsuhiro, Tokyo 108-8001 (JP)
(74) Representative: Vossius & Partner Patentanwälte Rechtsanwälte mbB
(86) International application number: PCT/JP2020/007688
(87) International publication number: WO 2020/195475

(57) **Abstract**

[Problem] To reduce the power consumption of an optical transponder.

[Solution] This optical transponder is provided with: a client interface which transmits and receives a client signal; a line interface provided with a signal processing circuit which performs signal processing for transporting the client signal using a digital coherent system, and an optical transceiver which converts between the client signal and an optical signal; and a control unit for controlling the operation of the signal processing circuit in accordance with the bandwidth of the client signal.

## Description

### [Technical Field]

The present invention relates to an optical transponder and a control method thereof, and particularly, relates to an optical transponder being used in an optical communication system to which a digital coherent scheme is applied, and a control method thereof.

### [Background Art]

A recent submarine cable system achieves large-capacity and high-speed transmission by using an optical transponder (hereinafter, simply referred to as a "transponder") employing a digital coherent scheme. In the digital coherent scheme, large-capacity transmission is achieved by performing digital signal processing on a signal to be transmitted and further modulating a frequency, a phase, and an amplitude of an optical carrier. Meanwhile, a transponder used in the digital coherent scheme performs high-speed signal processing using a digital signal processor (DSP) and a peripheral circuit thereof, and thus consumes large power. An increase in power consumption of the transponder not only increases an environmental load, but also becomes a factor of a large-scale heat dissipation structure and noise due to a cooling fan. Thus, an increase in power consumption attributable to the DSP becomes an obstacle to a high-functionality and high-integration of an optical transmission device equipped with the transponder.

In connection with the present invention, PTL 1 describes an optical transmission system in which a WDM transponder is controlled according to the number of L2 link aggregations in one client device.

### [Citation List]

### [Patent Literature]

[PTL 1] Japanese Unexamined Patent Application Publication No. 2010-283571

### [Summary of Invention]

### [Technical Problem]

A transmission capacity (for example, the number of multiplexed wavelengths) of a submarine cable system is designed according to a peak-time bandwidth of a signal (client signal) to be transmitted. However, a bandwidth required for a system varies depending on an increase or decrease in communication demand, and transmission using all wavelengths that can be multiplexed is not always required. Further, in a general submarine cable system, whether a client signal is included in a received optical signal cannot be determined until an electrical signal is reproduced from the received optical signal. Thus, it is necessary to carry out digital signal processing on a client signal by using a DSP in a transponder, even for an intrinsically unnecessary signal. Accordingly, it is difficult to reduce power consumption of the transponder even when the client signal has a small data volume (bandwidth).

### (Object of Invention)

An object of the present invention is to reduce power consumption of a transponder.

### [Solution to Problem]

An optical transponder according to the present invention includes: a client interface that transmits and receives a client signal; a line interface that includes a signal processing means for performing signal processing for transmitting the client signal by a digital coherent scheme, and an optical transceiver performing conversion between the client signal and an optical signal; and a control means for controlling activation of the signal processing means, according to a bandwidth of the client signal.

A control method of an optical transponder according to the present invention includes: performing, by a signal processing means, signal processing for transmitting and receiving a client signal by a digital coherent scheme; performing conversion between the client signal and an optical signal; and controlling activation of the signal processing means, according to a bandwidth of the client signal.

### [Advantageous Effects of Invention]

A transponder according to the present invention enables reduction in power consumption according to a bandwidth of a client signal.

### [Brief Description of Drawings]

[Fig. 1] Fig. 1 is a block diagram illustrating a configuration example of a submarine cable system 1000 according to a first example embodiment.
[Fig. 2] Fig. 2 is a block diagram illustrating a configuration example of a transponder 10 according to the first example embodiment.
[Fig. 3] Fig. 3 is a block diagram illustrating a configuration example of a transponder 11 according to a second example embodiment.
[Fig. 4] Fig. 4 is a block diagram illustrating a configuration example of a line interface 201 according to the second example embodiment.
[Fig. 5] Fig. 5 is a diagram illustrating an example of information indicating an activate request for a line interface of an opposite station.
[Fig. 6] Fig. 6 is a diagram illustrating an example of information indicating an active state of a line interface.
[Fig. 7] Fig. 7 is a flowchart illustrating an example of an operation procedure of a control unit 300.
[Fig. 8] Fig. 8 is a diagram illustrating an example of a variation in the number of line interfaces to be in an active state.
[Fig. 9] Fig. 9 is a diagram illustrating an example of a spectrum of an optical signal transmitted by a terminal station 1001.
[Fig. 10] Fig. 10 is a block diagram illustrating a configuration example of a submarine cable system 2000 according to a third example embodiment.
[Fig. 11] Fig. 11 is a block diagram illustrating a configuration example of a transponder 12 according to a fourth example embodiment.
[Fig. 12] Fig. 12 is a diagram illustrating a selection example of a line interface.
[Fig. 13] Fig. 13 is a diagram illustrating an example of wavelength arrangement when line interfaces having different transmission schemes are coexistent.

### [Example Embodiment]

### (First Example Embodiment)

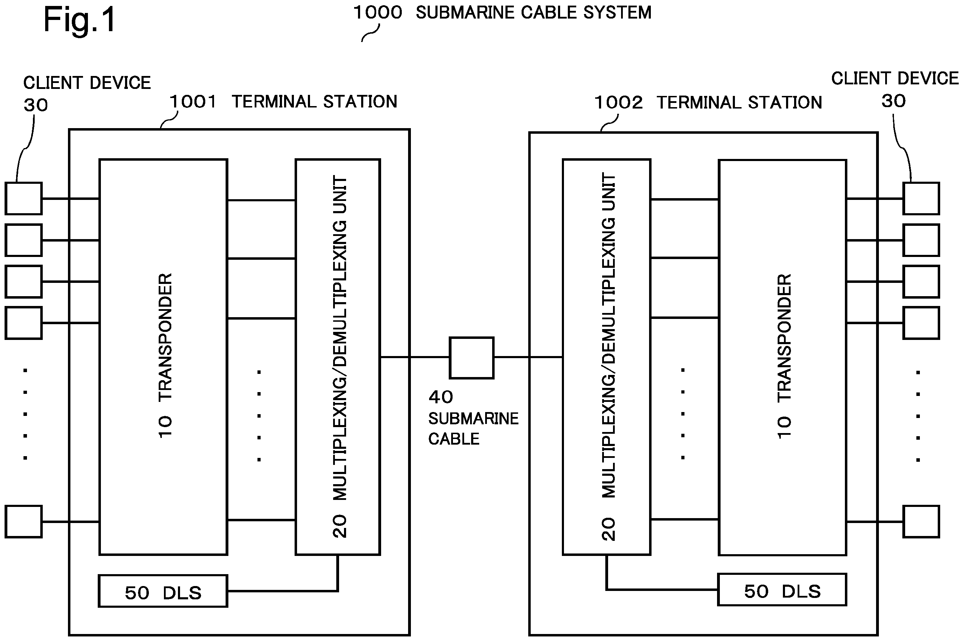

Fig. 1 is a block diagram illustrating a configuration example of a submarine cable system 1000 according to a first example embodiment. Terminal stations 1001 and 1002 are optical transmission devices set up on land, and are oppositely and communicably connected with each other via a submarine cable 40. The submarine cable 40 is an optical transmission line including an optical repeater. The submarine cable 40 may further include a submarine optical branching and coupling device or the like used in a general submarine cable system. Note that, in each drawing, an arrow assigned to a signal is illustrative and does not limit a direction of a signal.

Each of the terminal stations 1001 and 1002 includes a transponder 10, a multiplexing/demultiplexing unit 20, and a dummy light source 50. The transponder 10 and the multiplexing/demultiplexing unit 20 of an identical specification can be used in common in the terminal stations 1001 and 1002. Hereinafter, the terminal station 1001 will be described, but the terminal station 1002 includes a similar function as well.

The transponder 10 is connected with a plurality of client devices 30 being outside the terminal stations 1001 and 1002, and transmits and receives a client signal to and from the client device 30. The client device 30 is, for example, a communication device connected with a network of a user of the submarine cable system 1000. One client device 30 may be connected with the transponder 10 by a plurality of transmission lines. The transponder 10 generates a plurality of optical signals modulated by a digital coherent scheme according to a client signal received from the client device 30, and outputs the plurality of optical signals to the multiplexing/demultiplexing unit 20. The plurality of optical signals output by the transponder 10 have mutually different wavelengths. Further, the transponder 10 of the terminal station 1001 demodulates a client signal by detecting, by a digital coherent scheme, an optical signal received from the multiplexing/demultiplexing unit 20 and transmitted by the terminal station 1002. The client signal demodulated in the terminal station 1001 is a client signal output by the plurality of client devices 30 connected with the terminal station 1002. The transponder 10 of the terminal station 1001 outputs the demodulated client signal to the client device 30 connected with the terminal station 1001.

The multiplexing/demultiplexing unit 20 of the terminal station 1001 receives optical signals generated by the transponder 10 from ports different for each wavelength, and generates a wavelength-division multiplexed (WDM) signal by wavelength-division-multiplexing the optical signals. The generated WDM signal is transmitted to the terminal station 1002 via the submarine cable 40. Further, the multiplexing/demultiplexing unit 20 of the terminal station 1001 separates a WDM signal received from the terminal station 1002 via the submarine cable 40 for each wavelength of an optical carrier, and outputs separated optical signals from different ports to different ports of the transponder 10. The multiplexing/demultiplexing unit 20 can be achieved by using, for example, a dielectric multilayer film filter or an arrayed waveguide grating (AWG).

The dummy light source 50 outputs light for compensating for wavelength dependence of a transmission characteristic of the submarine cable 40. For example, when the submarine cable 40 includes an optical amplifier, wavelength dependence of a gain of the optical amplifier is reduced by outputting dummy light by the dummy light source 50, and thus, a spectrum of a WDM signal can be flatter. A wavelength of dummy light is set in such a way as not to overlap with a wavelength of an optical carrier transmitted by the transponder 10. When such compensation for wavelength dependence is unnecessary, the dummy light source 50 may not be used.

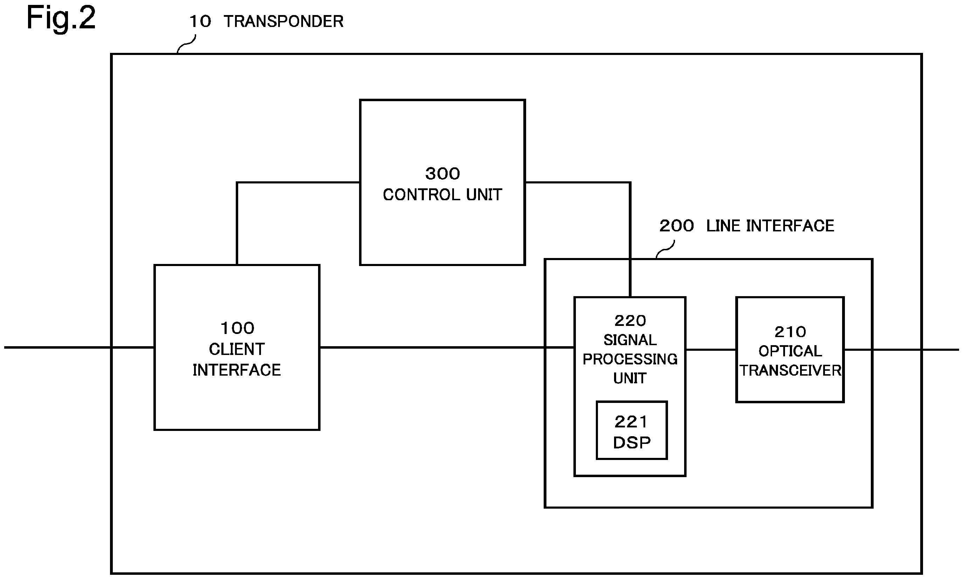

Fig. 2 is a block diagram illustrating a configuration example of the transponder 10 included in the terminal stations 1001 and 1002. The transponder 10 includes a client interface 100, a line interface 200, and a control unit 300. Note that, as illustrated in Fig. 1, the client interface 100 may be connected with the plurality of client devices 30. Further, the line interface 200 can transmit and receive a plurality of optical signals to and from the multiplexing/demultiplexing unit 20.

The client interface 100 transmits and receives a client signal to and from the client device 30. The client interface 100 receives a packet signal from the client device 30, and outputs the packet signal to the line interface 200. Further, the client interface 100 outputs, to the client device 30, a client signal included in an optical signal input from the line interface 200 and transmitted by an opposing terminal station (hereinafter, referred to as an "opposite station".). The packet signal is a signal including packet data used in, for example, the Ethernet (registered trademark) or a local area network (LAN).

The line interface 200 includes an optical transceiver 210 and a signal processing unit 220. The line interface 200 performs conversion between an optical signal and a packet signal input and output by the client interface 100. The optical transceiver 210 is an optical transmitter/receiver, and performs coherent modulation of a client signal processed by the signal processing unit 220 and coherent detection of an optical signal received from an opposite station. The signal processing unit 220 includes a DSP 221, and performs digital signal processing for transmitting and receiving a client signal by a digital coherent scheme.

The optical transceiver 210 performs coherent detection of an optical signal input from the multiplexing/demultiplexing unit 20 and received from an opposite station. The signal processing unit 220 demodulates a client signal by carrying out, on a detected signal, signal processing performed by a digital coherent scheme such as dispersion compensation, and outputs the client signal to the client interface 100.

Further, the signal processing unit 220 performs signal processing such as overhead processing on a client signal input from the client interface 100, prior to coherent modulation. The optical transceiver 210 converts the client signal processed by the signal processing unit 220 into an optical signal by performing coherent modulation, and outputs the optical signal to the multiplexing/demultiplexing unit 20.

The control unit 300 controls each part of the transponder 10. The control unit 300 controls activation of the signal processing unit 220, according to a bandwidth of a client signal transmitted and received by the client interface 100. For example, the control unit 300 activates or inactivates the DSP 221 included in each of a plurality of signal processing units 220 individually according to a bandwidth of a client signal. The signal processing unit 220 in which the DSP 221 is active performs digital signal processing of a transmitted and received client signal. The signal processing unit 220 in which the DSP 221 is inactive is inactivated and does not perform processing of a client signal.

For example, when a bandwidth necessary for transmission of a client signal is reduced due to reduction in data volume of a client signal transmitted and received by the transponder 10, the control unit 300 suppresses activation of the DSP 221 included in the transponder 10. When the transponder 10 includes a plurality of DSPs 221, the control unit 300 reduces the number of active DSPs 221 in response to reduction in a bandwidth of a client signal, and inactivates the DSP 221 unnecessary for processing.

The transponder 10 including such a configuration can reduce power consumption of the transponder 10 and the terminal stations 1001 and 1002. The reason is that the control unit 300 controls activation of the DSP 221 according to a bandwidth of a client signal.

### (Second Example Embodiment)

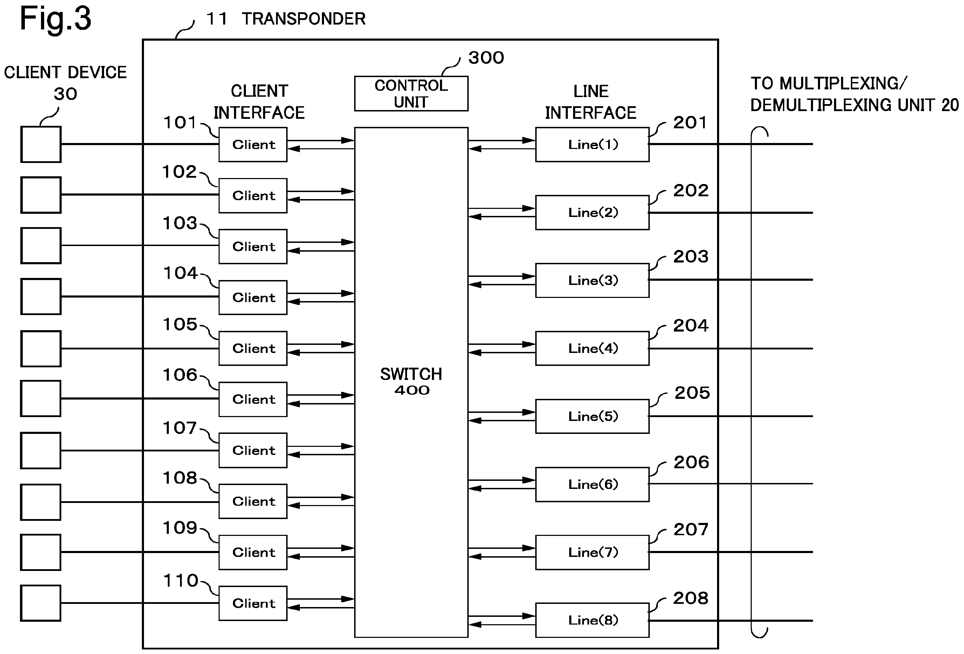

Fig. 3 is a block diagram illustrating a configuration example of a transponder 11 according to a second example embodiment of the present invention. The transponder 11 includes a switch 400, in addition to the transponder 10 described in the first example embodiment. Further, the transponder 11 may be used in terminal stations 1001 and 1002 instead of the transponder 10. The transponder 11 includes ten client interfaces 101 to 110, eight line interfaces 201 to 208, a control unit 300, and the switch 400. The client interfaces 101 to 110 in Fig. 3 are equivalent to the client interface 100 in Fig. 2. The line interfaces 201 to 208 in Fig. 3 are equivalent to the line interface 200 in Fig. 2.

Each of the client interfaces 101 to 110 transmits and receives a client signal to and from a client device 30 being outside the transponder 11. The client interfaces 101 to 110 receive, from the client device 30 connected therewith, a client signal to be transmitted to an opposite station, and output the client signal to the switch 400. Further, the client interfaces 101 to 110 output, to the client device 30, a client signal output by the switch 400. The client signal output by the switch 400 to the client interfaces 101 to 110 is a client signal demodulated by the line interfaces 201 to 208 from an optical signal received from an opposite station. One client device 30 may be connected with a plurality of client interfaces.

All of the line interfaces 201 to 208 include an optical transceiver 210 and a signal processing unit 220, similarly to the line interface 200 in Fig. 2. The line interfaces 201 to 208 carry out digital signal processing on a client signal input from the switch 400, convert the processed signal into an optical signal, and output the optical signal to a multiplexing/demultiplexing unit 20. The client signal input from the switch 400 to the line interfaces 201 to 208 is a client signal to be transmitted to an opposite station. Further, the line interfaces 201 to 208 perform coherent detection of an optical signal separated from a WDM signal by the multiplexing/demultiplexing unit 20, generate a client signal by further performing digital signal processing on the optical signal, and output the client signal to the switch 400. The client signal output by the line interfaces 201 to 208 to the switch 400 is a client signal output by the switch 400 to the line interfaces 201 to 208 in an opposite station.

A wavelength of an optical signal transmitted and received by the line interfaces 201 to 208 and a wavelength of an optical signal input and output through each port of the multiplexing/demultiplexing unit 20 are set in such a way that opposing line interfaces having an identical reference sign are connected with each other. In other words, when optical signals transmitted by the line interfaces 201 to 208 of the terminal station 1001 have wavelengths of λ1 to λ8, the multiplexing/demultiplexing unit 20 of the terminal station 1001 outputs, to a submarine cable 40, a WDM signal combining the optical signals having wavelengths of λ1 to λ8. The multiplexing/demultiplexing unit 20 of the terminal station 1002 separates the WDM signal into optical signals having wavelengths of λ1 to λ8, and outputs the optical signals to the line interfaces 201 to 208 of the terminal station 1002. As a result, for example, the line interface 201 of the terminal station 1002 receives an optical signal having a wavelength of λ1 transmitted by the line interface 201 of the terminal station 1001.

The switch 400 is a packet switch having a plurality of ports on both a client-interface side and a line-interface side. Upon an instruction of the control unit 300, the switch 400 connects between the client interfaces 101 to 110 and the line interfaces 201 to 208 connected with the ports on each of the sides. The switch 400 connects between the client interfaces 101 to 110 and one or more line interfaces 201 to 208 in which a DSP 221 is active, according to a total bandwidth of client signals and a bandwidth of each of the line interfaces 201 to 208.

The switch 400 according to the present example embodiment is arranged inside the transponder 11. When the switch 400 is arranged inside the transponder 11, it becomes easy to design in such a way that a speed of each port of the switch 400 is consistent between the client interfaces 101 to 110 and the line interfaces 201 to 208. As a result, efficient and detailed bandwidth control of the transponder 11 becomes possible. On the other hand, when the switch 400 is arranged as a single device outside the transponder 11, there arises necessity to connect between the switch 400 and the transponder 11 by means of a generalpurpose physical interface. In this case, since a physical interface between the switch 400 and the transponder 11 has limited options for a specification including a speed, it becomes difficult to flexibly distribute a client signal to the line interfaces 201 to 208 according to a bandwidth.

Each of the line interfaces 201 to 208 is set into either an active state or an inactive state, upon an instruction from the control unit 300. A line interface in which the DSP 221 is active is in an active state, and the signal processing unit 220 performs digital signal processing for transmitting and receiving a client signal. A line interface in which the DSP 221 is inactive is in an inactive state. In this case, the signal processing unit 220 does not perform digital signal processing for a client signal. Thus, power consumption of a line interface can be reduced by inactivating the DSP 221. Note that, even in an inactive state, the line interfaces 201 to 208 may operate a circuit not using the DSP 221. As will be described later, when the DSP 221 is inactivated, a dummy pattern generation unit 251 included in the signal processing unit 220 generates and outputs a dummy pattern to the optical transceiver 210. Then, a line interface in an inactive state generates an optical signal modulated with the dummy pattern.

The control unit 300 controls connection between a client interface-side port and a line interface-side port of the switch 400 and activation of the DSP 221 included in the line interface 200, according to a bandwidth of a client signal. The control unit 300 acquires a bandwidth (communication amount) of a client signal received from the client interfaces 101 to 110 connected with the transponder 11. The control unit 300 has a function of communicating with the line interfaces 201 to 208, and can set the line interfaces 201 to 208 independently into an active state or into an inactive state.

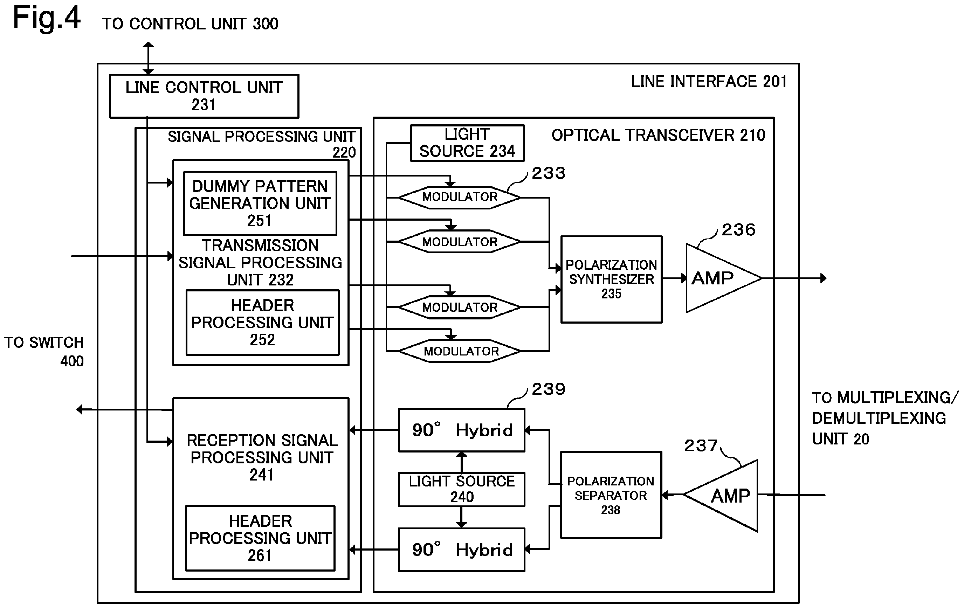

Fig. 4 is a block diagram illustrating a configuration example of the line interface 201 according to the second example embodiment. Hereinafter, a configuration and a function of the line interface 201 will be described. The line interfaces 202 to 208 have a configuration and a function similar to the line interface 201. The line interface 201 includes a line control unit 231, a transmission signal processing unit 232, a modulator 233, a light source 234, a polarization synthesizer 235, and an optical amplifier (AMP) 236. Further, the line interface 201 includes an optical amplifier 237, a polarization separator 238, a 90-degree hybrid 239, a light source 240, and a reception signal processing unit 241.

The DSP 221 is included in the signal processing unit 220 similarly to Fig. 1, but not illustrated in Fig. 4. One DSP 221 may achieve a function of the transmission signal processing unit 232 and the reception signal processing unit 241 of the line interface 201.

The transmission signal processing unit 232 and the reception signal processing unit 241 are one example of a configuration achieving a function of the signal processing unit 220 in Fig. 2. Further, the modulator 233, the light source 234, the polarization synthesizer 235, the optical amplifiers 236 and 237, the polarization separator 238, the 90-degree hybrid 239, and the light source 240 are one example of a configuration achieving a function of the optical transceiver 210 in Fig. 2.

The line control unit 231 communicates with the control unit 300 of the transponder 11 illustrated in Fig. 3, and controls activation and inactivation of the DSP 221 according to an instruction from the control unit 300. A function of the control unit 300 and a function of the line control unit 231 may be integrated into one control unit. The line control unit 231 notifies the transmission signal processing unit 232 of "line activate request information" and "line active state information" of the line interfaces 201 to 208 notified from the control unit 300. Further, the line control unit 231 reads, from the reception signal processing unit 241, "line activate request information" and "line active state information" transmitted by an opposite station, and notifies the control unit 300. The "line activate request information" and the "line active state information" will be described later.

The transmission signal processing unit 232 receives a client signal from the client device 30 via the switch 400. The transmission signal processing unit 232 performs, by using the DSP 221, forward error correction (FEC) coding of a received client signal, and digital signal processing before output of a client signal to the modulator 233. The DSP 221 may perform polarization phase separation for polarization-division multiplexing and pre-emphasis processing for compensating for distortion of the optical transmission line 40. The line interface 201 set into an active state activates the DSP 221, and performs digital signal processing of a client signal. The line interface 201 set into an inactive state inactivates the DSP 221, and transitions into a low power consumption state.

The transmission signal processing unit 232 includes the dummy pattern generation unit 251 and a header processing unit 252. The dummy pattern generation unit 251 is a circuit independent of the DSP 221, and may be arranged outside the transmission signal processing unit 232. The dummy pattern generation unit 251 can generate a dummy pattern without using the DSP 221, even when the DSP 221 is inactive. When the DSP 221 is inactivated, the signal processing unit 220 outputs a dummy pattern generated by the dummy pattern generation unit 251 to the optical modulator 233. The dummy pattern is, for example, random data having a speed similar to a client signal. The optical transceiver 210 of a line interface in an inactive state modulates an optical carrier by using the dummy pattern. In other words, the line interface 201 outputs an optical signal from the optical transceiver 210 to the multiplexing/demultiplexing unit 20 whether being in an active state or an inactive state. When the DSP 221 is activated, the signal processing unit 220 stops the dummy pattern generation unit 251, and outputs a client signal processed by the DSP 221 to the modulator 233.

The header processing unit 252 stores "line activate request information" and "line active state information" of the transponder 11 in a free area of FEC_OH added to a client signal to be transmitted, and notifies a transponder of an opposite station. FEC_OH is an abbreviation of forward error correction overhead. A function of the header processing unit 252 is achieved by the DSP 221.

As one coherent optical transmission scheme, a quadrature phase shift keying (QPSK) scheme is known. In the QPSK scheme, two optical carriers modulated with different pieces of data and having phases mutually different by 90° are multiplexed. Further, when a polarization-division multiplexing scheme in which two QPSK optical signals having planes of polarization perpendicular to each other are multiplexed and transmitted is used in combination, four pieces of data can be simultaneously modulated and transmitted. Since a configuration of an optical transceiver in polarization-division multiplexing QPSK scheme is well known, hereinafter, a well-known configuration of an optical transmission/reception function included in the line interface 201 will be simply described. Further, the line interfaces 202 to 208 also transmit and receive an optical signal similarly to the line interface 201.

The optical transceiver 210 in Fig. 4 illustrates a configuration example when a modulation/demodulation scheme is the polarization-division multiplexing QPSK scheme. However, a modulation/demodulation scheme of the optical transceiver 210 is not limited to the polarization-division multiplexing QPSK scheme. The transmission signal processing unit 232 carries out digital signal processing on a client signal input from the switch 400, and separates the client signal into four signals by serial-parallel conversion. The modulator 233 includes four Mach-Zehnder optical modulators. The modulator 233 modulates, by using the four signals output from the transmission signal processing unit 232, an optical carrier output by the light source 234, and outputs the optical carrier to the polarization synthesizer 235. The light source 234 is a light source that generates an optical carrier. A wavelength of the light source 234 differs for each of the line interfaces 201 to 208.

Two sets of QPSK signals having polarized waves perpendicular to each other are generated from the four optical signals output from the modulator 233. The polarization synthesizer 235 polarization-division-multiplexes (polarization-synthesizes) the two sets of QPSK signals and outputs the polarization-division multiplexed QPSK signal to the optical amplifier 236. The optical amplifier 236 is a booster amplifier that amplifies an optical signal to be transmitted. An optical signal amplified by the optical amplifier 236 is output to the multiplexing/demultiplexing unit 20.

The multiplexing/demultiplexing unit 20 generates a WDM signal by combining the polarization-division multiplexed QPSK signals output from the line interfaces 201 to 208, and transmits the WDM signal to an opposite station. Further, the multiplexing/demultiplexing unit 20 receives, from an opposite station, a WDM signal acquired by wavelength-division multiplexing of polarization-division multiplexed QPSK signals, and outputs polarization-division multiplexed QPSK signals separated for each wavelength to the line interfaces 201 to 208. Hereinafter, description will be given also by using the line interface 201 as an example.

The line interface 201 receives a polarization-division multiplexed QPSK signal from the multiplexing/demultiplexing unit 20, and amplifies the polarization-division multiplexed QPSK signal by using the optical amplifier 237. The optical amplifier 237 is a preamplifier that amplifies a received optical signal. An optical signal amplified by the optical amplifier 237 is separated into two QPSK signals by the polarization separator 238. The polarization-separated QPSK signals are input to the two 90-degree hybrids 239. The 90-degree hybrid 239 generates four reception signals from a beat signal between a QPSK signal and local light, and outputs the four reception signals to the reception signal processing unit 241. The light source 240 is a light source of local light for performing coherent detection of a QPSK signal.

The reception signal processing unit 241 performs digital signal processing on the four reception signals output from the 90-degree hybrid 239, and demodulates one client signal. When the line interface 201 is set into an active state upon an instruction from the line control unit 231, the reception signal processing unit 241 executes, by using the DSP 221, digital signal processing included in a receiver of a coherent scheme. For example, the reception signal processing unit 241 compensates for wavelength dispersion, polarization dispersion, and the like generated during transmission, and performs error correction based on FEC. When the line interface 201 is set into an inactive state, the DSP 221 of the line interface 201 is inactivated upon an instruction of the line control unit 231. In this case, since a function of the reception signal processing unit 241 using the DSP 221 stops operating, the line interface 201 does not demodulate a client signal, and transitions into a low power consumption state.

The reception signal processing unit 241 includes a header processing unit 261. The header processing unit 261 terminates FEC overhead (FEC_OH) of a reception signal, and extracts an activate request ("line activate request information") for a line interface of a transmissiondestination terminal station and active state information ("line active state information") of an opposite station that are transmitted by the opposite station. The reception signal processing unit 241 notifies the line control unit 231 of the extracted pieces of information. A function of the header processing unit 261 is achieved by the DSP 221.

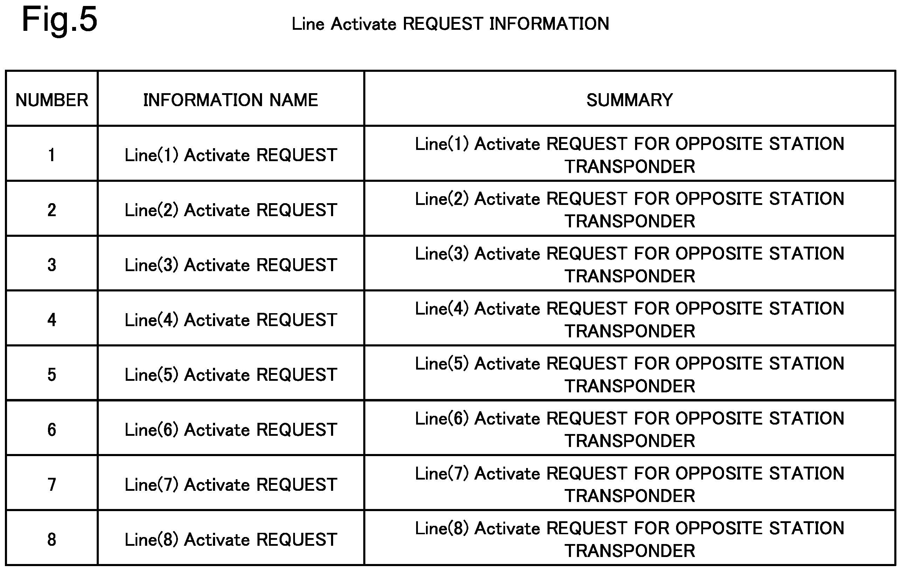

Fig. 5 is a diagram illustrating an example of information indicating an activate request ("line activate request information") for a line interface of an opposite station. In Fig. 5, a line (1) means the first line interface 201 of an opposite station. For example, a "line (1) activate request" transmitted by the terminal station 1001 includes a request for setting the first line interface 201 (the line (1)) included in the transponder of the terminal station 1002 being an opposite station into an active state or an inactive state. Further, a "line (1) activate request" received by the terminal station 1001 includes a request from the terminal station 1002 for setting (activating) the first line interface 201 (the line (1)) included in the transponder of the terminal station 1001 into an active state or an inactive state.

The header processing unit 252 of the transmission signal processing unit 232 of at least one of the line interfaces 201 to 208 included in the terminal station 1001 stores the pieces of "line activate request information" in an unused area of FEC_OH, and transmits the pieces of "line activate request information" to an opposite station (the terminal station 1002). The terminal station 1001 generates "line activate request information" in such a way that line interfaces (for example, 201 to 204) identical to line interfaces (201 to 204) of the terminal station 1001 set into an active state are also set into an active state in the terminal station 1002. In this case, a "line (1) activate request" to a "line (4) activate request" include a request for setting the line interfaces 201 to 204 into an active state. With this, the line interfaces 201 to 208 of the terminal station 1001 and the line interfaces 201 to 208 of the terminal station 1002 can be operated in an identical active state.

Further, the control unit 300 may allow "line active request information" to include a setting for connection between a client interface-side port and a line interface-side port of the switch 400 (hereinafter, referred to as a "port setting".). When the port setting is used by an opposite station, the same port setting can be used between opposing terminal stations. As described above, the line interfaces 201 to 208 of the terminal station 1001 are respectively opposite to the line interfaces 201 to 208 of the terminal station 1002. Accordingly, when the port setting of the switch 400 is shared between the terminal station 1001 and the terminal station 1002, each of the client interfaces 101 to 110 of the terminal station 1001 can be connected with a client interface assigned with an identical reference sign in the terminal station 1002. However, a procedure for the above-described port setting is an example and is not compulsory. For transmission of a client signal, it is necessary that the client interfaces 101 to 110 of the terminal station 1001 are connected with the client interfaces 101 to 110 of the terminal station 1002, according to a specification of the submarine cable system 1000. For example, the client interface 101 of the terminal station 1001 may be connected with the client interface 110 of the terminal station 1002, based on a specification. In this case, the port setting of the switch 400 differs between the terminal station 1001 and the terminal station 1002.

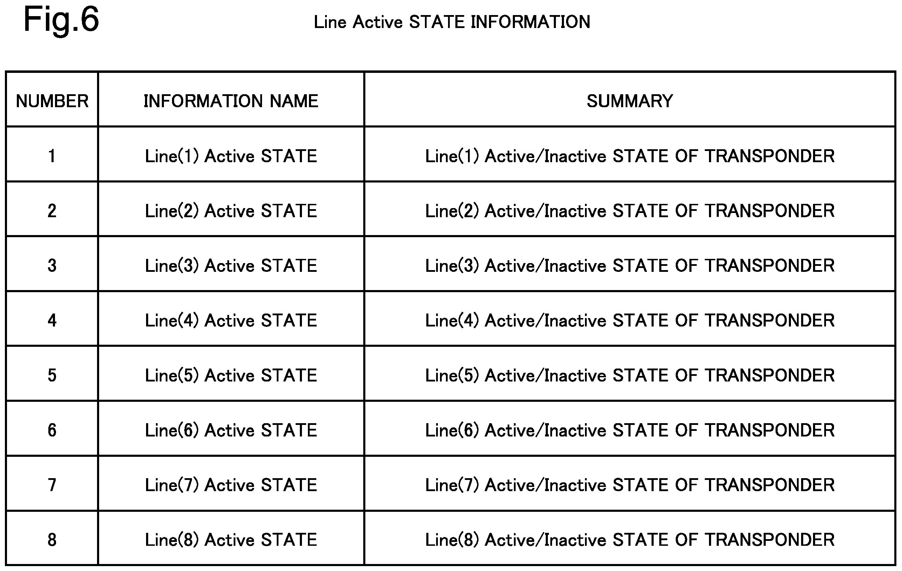

Fig. 6 is a diagram illustrating an example of information ("line active state information") indicating an active state of a line interface. The "line active state information" includes information indicating whether each of the line interfaces 201 to 208 is in an active state (active) or an inactive state (inactive). For example, a "line (1) active state" in Fig. 6 is information on an active state of the line interface 201 of a terminal station transmitting the information. A "line (1) active state" transmitted by the terminal station 1001 to the terminal station 1002 indicates a state of the line interface 201 of the terminal station 1001.

The terminal station 1001 stores, by using the header processing unit 252 of the transmission signal processing unit 232, the pieces of line active state information together with line activate request information in an unused area of FEC_OH, and transmits the pieces of information to an opposite station (the terminal station 1002). Similarly, the terminal station 1002 also stores line activate request information and line active state information in an unused area of FEC_OH, and transmits the pieces of information to the terminal station 1001. The terminal station 1001 can know an active state of a line interface of the terminal station 1002, from "line active state information" received from the terminal station 1002. The terminal station 1001 can know whether a requested line interface is in an active state in the terminal station 1002, by comparing "line activate request information" already transmitted to the terminal station 1002 with "line active state information" received from the terminal station 1002. When a requested line interface is not in an active state in the terminal station 1002, the terminal station 1001 may again transmit "line activate request information" to the terminal station 1002. Alternatively, the terminal station 1001 may determine that a line interface of the terminal station 1002 requested for activation is failed, and may change a line interface to be activated.

### (a) Setting Active State of Line Interface

A procedure for setting an active state of the line interfaces 201 to 208 will be described. As illustrated in Fig. 1, the terminal station 1001 and the terminal station 1002 are connected with each other via the submarine cable 40 in such a way as to bidirectionally transmit a client signal between the client devices 30. The terminal station 1001 and the terminal station 1002 have an identical configuration, and the terminal station 1002 also operates similarly to the terminal station 1001.

(a1) The control unit 300 of the terminal station 1001 acquires, from the switch 400, a bandwidth (communication amount) of a client signal being input from the client interfaces 101 to 110 to the switch 400 for each of the client interfaces 101 to 110. Then, the control unit 300 calculates a total bandwidth of client signals used in communication between the terminal station 1001 and the client device 30.

(a2) The control unit 300 of the terminal station 1001 calculates, based on a bandwidth that can be processed by the line interfaces 201 to 208, the number of line interfaces necessary for transmitting a client signal to the terminal station 1002. A bandwidth of each of client signals assigned to the line interfaces 201 to 208 is set not to exceed a bandwidth that can be processed by each of the line interfaces 201 to 208. Then, the control unit 300 instructs the line control unit 231 to set the calculated number of line interfaces into an active state, among the line interfaces 201 to 208. Setting an active state or an inactive state of the line interfaces 201 to 208 is performed by the line control unit 231 activating or inactivating the DSP 221 in each of the line interfaces 201 to 208.

(a3) The control unit 300 of the terminal station 1001 instructs the switch 400 to assign a client signal being input from the client interfaces 101 to 110 to the switch 400 to a line interface set into an active state.

(a4) At least one of the line interfaces 201 to 208 of the terminal station 1001 stores, by using the header processing unit 252, a "line activate request" illustrated in Fig. 5 and a "line active state" illustrated in Fig. 6 in an unused area of FEC_OH of a transmission signal. The transmission signal is a client signal signal-processed by the transmission signal processing unit 232 and is to be transmitted to the terminal station 1002. The signal in which the pieces of information are stored is modulated by the optical transceiver 210 and is transmitted to the terminal station 1002.

(a5) At least one of the line interfaces 201 to 208 of an opposite station (the terminal station 1002) reads the "line activate request" and the "line active state" stored in FEC OH in the terminal station 1001. The line control unit 231 of the terminal station 1002 notifies the control unit 300 of the terminal station 1002, of the read pieces of information.

(a6) The control unit 300 of the terminal station 1002 sets, in response to a request of the "line activate request" transmitted by the terminal station 1001, the line interfaces 201 to 208 into an active state or an inactive state. Then, the control unit 300 assigns and outputs, by using the switch 400, a client signal from the terminal station 1001 demodulated by a line interface set into an active state, to the client interfaces 101 to 110 of the terminal station 1002. For example, the control unit 300 of the terminal station 1002 activates, in the terminal station 1002, a line interface specified by the "line activate request" notified from the terminal station 1001.

Further, the control unit 300 may set connection between the client interfaces 101 to 110 and the line interfaces 201 to 208 by applying a port-based virtual local area network (VLAN) in the switch 400. The control unit 300 on a side transmitting a client signal may transmit "line active request information" including a port setting of the switch 400 to an opposite station, and the opposite station may set a port VLAN of the switch 400 of the opposite station, based on the port setting. With this, identical client interfaces (for example, the client interfaces 101) are connected with each other between opposing terminal stations.

Note that, in order to transmit and receive "line activate request information" and "line active state information" to and from the terminal station 1001 and the terminal station 1002, it is preferred that at least one pair of opposing line interfaces are set into an active state at a time of system operation start.

Next, a detail of an operation of each part of the transponder 11 will be described by using the terminal station 1001 as an example.

### (b) Operation of Control Unit 300

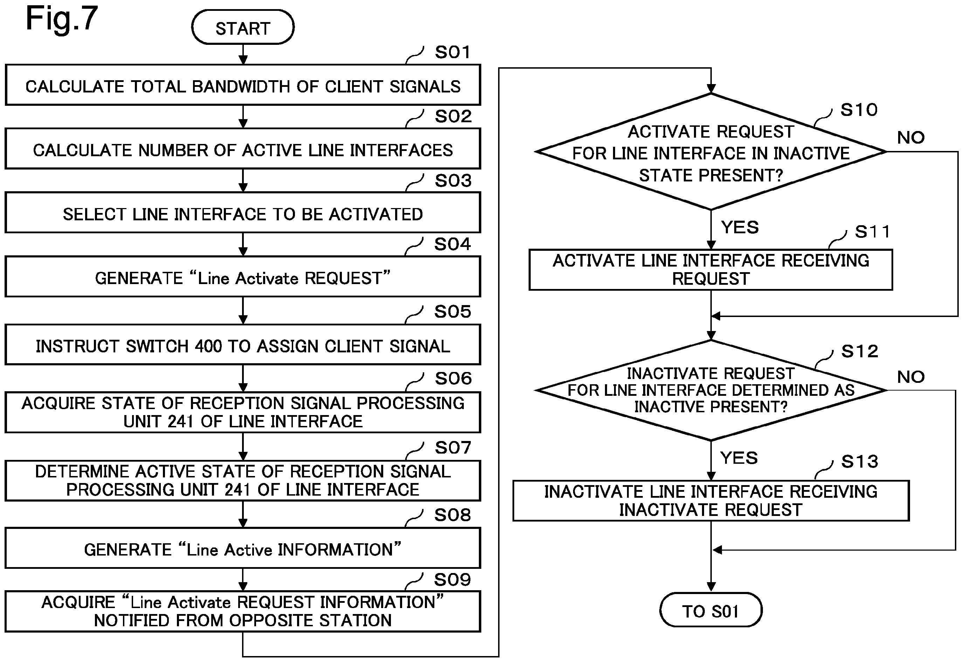

An operation of the control unit 300 will be described with reference to a flowchart in Fig. 7.

(b1) The control unit 300 of the terminal station 1001 acquires, from the switch 400, information on a communication amount of a client signal (packet signal) being input from the client interfaces 101 to 110. Then, the control unit 300 calculates a total bandwidth of packets being input from all of the client interfaces 101 to 110 (Step S01 in Fig. 7).

(b2) The control unit 300 calculates the number of line interfaces to be activated, according to the calculated total bandwidth (Step S02), and selects a line interface to be activated from among the line interfaces 201 to 208 (Step S03). Then, the control unit 300 sets an active state of the line interfaces 201 to 208 by notifying the line control unit 231 of each line interface, of the selected line interface. Further, the control unit 300 generates "line activate request information" in Fig. 5, based on a selection result of the line interface to be activated, and notifies each of the line control units 231 (Step S04). Further, the control unit 300 instructs the switch 400 to assign a client signal, based on an active state of the line interfaces 201 to 208 (Step S05).

(b3) The control unit 300 acquires a processing state of the reception signal processing unit 241 from each of the line control units 231 of the line interfaces 201 to 208 (Step S06). When the DSP 221 is in an inactive state or a received signal is out of synchronization, the reception signal processing unit 241 is determined as an inactive state (inactive). When the DSP 221 of the line interface is active and a client signal is normally demodulated, the reception signal processing unit 241 is determined as an active state (active) (Step S07). The control unit 300 generates, from a determination result thereof, line active state information of the line interfaces 201 to 208 illustrated in Fig. 6, and notifies the line control unit 231 (Step S08).

(b4) The control unit 300 acquires, from the line control unit 231, "line activate request information" for the transponder of the terminal station 1001 notified from the terminal station 1002 (Step S09). For a line interface of the terminal station 1001 set into an inactive state, whether a request for setting into an active state is received from the terminal station 1002 is checked (Step S10). When activation is requested (Step S10: YES), the control unit 300 of the terminal station 1001 cancels an inactive state of the requested line interface, and sets the line interface into an active state (Step S11). Further, for a line interface determined as an inactive state in Step S07, whether a request for setting into an inactive state is issued from the terminal station 1002 is checked (Step S12). When a request for setting into an inactive state is issued, the line interface is set into an inactive state (Step S13). Herein, when an inactivate request for a line interface being in an active state for the purpose of transmission of a client signal is notified from an opposite station, the line interface maintains an active state in order to continue transmission of a client signal.

When an active state of a line interface changes in Step S11 or S13, the control unit 300 connects the line interfaces 201 to 208 with the client interfaces 101 to 110, based on a latest active state. Note that, when received "line activate request information" includes information on a port setting of the switch 400, the control unit 300 may set a connection between ports of the switch 400, based on the information. When the switch 400 cannot be operated with a received setting, an alarm indicating that effect may be returned to an opposite station. The control unit 300 repeats the above procedure.

### (c) Operation of Switch 400

(c1) The switch 400 of the terminal station 1001 connects, according to an instruction of the control unit 300, between the client interfaces 101 to 110 and line interfaces in such a way that a client signal received from each of the client interfaces 101 to 110 is dispersed to a line interface being in an active state. The switch 400 may distribute a client signal of one client device to a plurality of line interfaces. One line interface processes a client signal received from a plurality of client interfaces within a bandwidth that can be processed. Further, the switch 400 assigns and outputs a client signal received from the line interfaces 201 to 208 to the client interfaces 101 to 110. The switch 400 may assign, by using a port-based VLAN, a received client signal to any of the client interfaces 101 to 110 with which the client device 30 at a destination thereof is connected.

(c2) The switch 400 monitors a bandwidth (communication amount) of a client signal being input from each of the client interfaces 101 to 110. Upon a request from the control unit 300, the switch 400 notifies the control unit 300 of a communication amount of each of the client interfaces 101 to 110.

### (d) Operation of Line Control Unit 231

(d1) Upon an instruction from the control unit 300, the line control unit 231 of the terminal station 1001 sets an active state and an inactive state for the line interfaces 201 to 208 of the terminal station 1001.

(d2) The line control unit 231 of the terminal station 1001 acquires, from the control unit 300, "line activate request information" and "line active state information" generated by the control unit 300 of the terminal station 1001, and notifies the transmission signal processing unit 232.

(d3) "Line activate request information" and "line active state information" generated by the terminal station 1002 are stored in an unused area of FEC_OH of an optical signal and are notified to the terminal station 1001. Upon an instruction from the control unit 300, the line control unit 231 of the terminal station 1001 acquires, from the reception signal processing unit 241, the "line activate request information" and the "line active state information" notified from the terminal station 1002, and notifies the control unit 300.

### (e. Operation of Transmission Signal Processing Unit 232)

(e1) When a line interface receives an instruction to set into an active state from the line control unit 231, the transmission signal processing unit 232 causes the DSP 221 to return from an inactive state. Then, an output of the transmission signal processing unit 232 is changed from a dummy pattern to an output of the DSP 221 (that is, a client signal signal-processed by the DSP 221). In contrast, when a line interface receives an instruction to set into an inactive state, the transmission signal processing unit 232 causes the DSP 221 to transition into an inactive state, and switches an output of the transmission signal processing unit 232 to a dummy pattern generated by the dummy pattern generation unit 251.

(e2) The transmission signal processing unit 232 of the terminal station 1001 stores, in an unused area of FEC_OH, "line activate request information" and "line active state information" of the terminal station 1001 notified from the line control unit 231. Specifically, the header processing unit 252 stores "line activate request information" and "line active state information" in an unused area of FEC_OH of a signal-processed client signal. The pieces of stored information are transmitted to the terminal station 1002.

### (f. Operation of Reception Signal Processing Unit 241)

(f1) When a line interface receives an instruction to set into an active state from the line control unit 231, the reception signal processing unit 241 causes the DSP 221 to return from an inactive state, and resumes processing of outputting a client signal to the switch 400. When a line interface receives an instruction to set into an inactive state, the reception signal processing unit 241 causes the DSP 221 to transition into an inactive state, and stops processing of the reception signal processing unit 241.

(f2) Upon an instruction from the line control unit 231, the reception signal processing unit 241 notifies the line control unit 231 of "line activate request information" and "line active state information" extracted from an unused area of FEC_OH of a reception signal and notified from an opposite station.

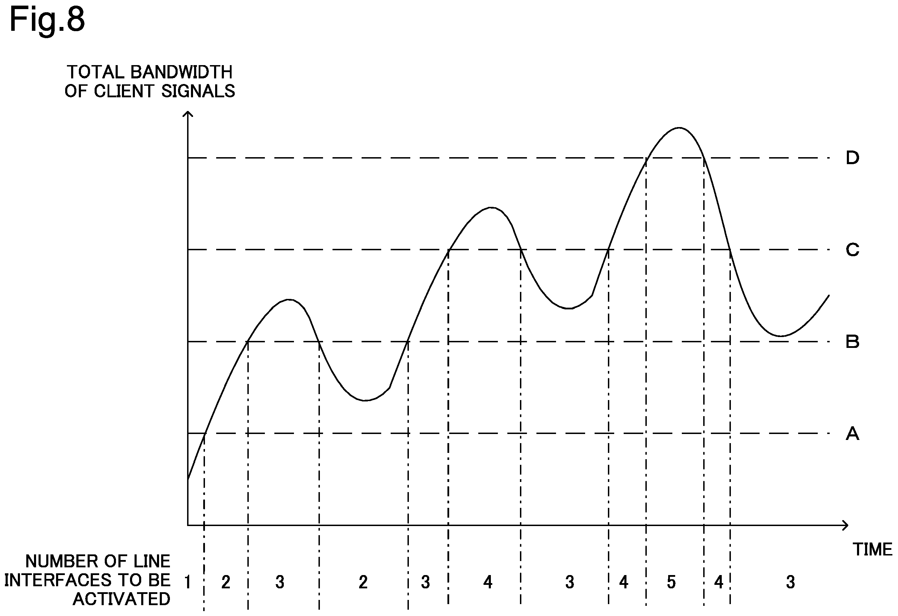

Fig. 8 illustrates an example of a variation in the number of line interfaces to be in an active state when a total bandwidth of client signals being received by the client interfaces 101 to 110 included in the terminal station 1001 from the client device 30 temporally changes. A vertical axis in Fig. 8 indicates a total bandwidth of client signals, and a horizontal axis indicates time. A to D on the right in Fig. 8 indicate an upper limit for a total bandwidth of client signals that can be processed by the line interfaces 201 to 208 according to the number of line interfaces in an active state. A indicates an upper limit for a bandwidth when only one line interface is in an active state. Similarly, B, C, and D indicate an upper limit for a bandwidth when two, three, and four line interfaces are in an active state, respectively. The vertical axis indicates a relative relationship for a bandwidth, and does not indicate an absolute value for a bandwidth. Further, in Fig. 8, it is assumed that the line interfaces 201 to 208 have identical performance and each can process an equal bandwidth.

In Fig. 8, the number of line interfaces to be in an active state is indicated next to the "number of line interfaces to be activated". The number indicates the number of line interfaces activated according to a variation in a total bandwidth of client signals received by the terminal station 1001 from the client device 30. For example, when a bandwidth of a client signal is equal to or less than A, at least one line interface needs to be set into an active state. Further, when a bandwidth of a client signal is more than B but not more than C, at least three line interfaces need to be set into an active state.

In Fig. 8, no hysteresis is given to a bandwidth at a threshold value for switching the number of line interfaces to be set into an active state. However, in order to reduce frequency of increasing and decreasing the number of active line interfaces, hysteresis may be given as follows.
(1) When a total unused bandwidth in a bandwidth that can be processed by a line interface in an active state is less than 20% of a bandwidth of one line interface, one line interface to be set into an active state is added.
(2) When a total unused bandwidth in a bandwidth that can be processed by a line interface in an active state exceeds 150% of a bandwidth of one line interface, one line interface in an active state is subtracted.

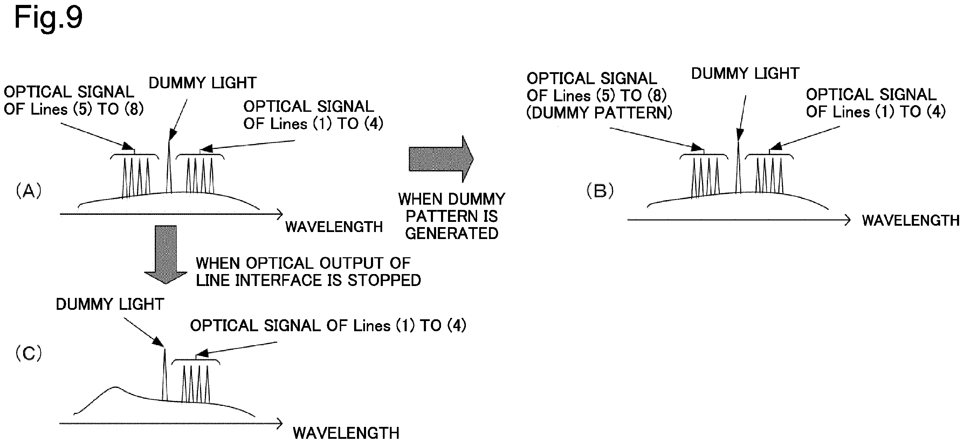

Fig. 9 is a diagram illustrating an example of a spectrum of an optical signal transmitted by the terminal station 1001. A horizontal axis in the figure indicates a wavelength, and a vertical axis indicates intensity of an optical signal. (A) in Fig. 9 is an example of a spectrum of a WDM signal transmitted from the terminal station 1001 to the terminal station 1002 when the line interfaces 201 to 208 (lines (1) to (8) in Fig. 9) are in an active state. An optical signal output from the lines (1) to (4) (the line interfaces 201 to 204) is arranged on a long-wavelength side, and an optical signal output from the lines (5) to (8) (the line interfaces 205 to 208) is arranged on a short-wavelength side. Further, dummy light is transmitted in a wavelength band between these optical signals. The dummy light is light generated by the dummy light source 50 illustrated in Fig. 1, and is used for compensating for gain tilt of an optical amplifier.

(B) in Fig. 9 is an example of a spectrum of an optical signal transmitted from the terminal station 1001 to the terminal station 1002 when the lines (1) to (4) are active and the lines (5) to (8) are inactive. An optical signal on a long-wavelength side is an optical signal output from the lines (1) to (4), and a client signal is transmitted. On the other hand, an optical signal on a short-wavelength side is an optical signal modulated with a dummy signal generated by the dummy pattern generation unit 251 in the lines (5) to (8) of the terminal station 1001. In this way, the terminal station 1001 transmits an optical signal modulated with a dummy signal even when some of the line interfaces 201 to 208 are inactive. Thus, in (B) in Fig. 9, a wavelength characteristic of an optical amplifier does not vary when compared with (A) in Fig. 9. Accordingly, when a bandwidth of a client signal is small, some of line interfaces are inactivated and power consumption of the terminal stations 1001 and 1002 is reduced, while a variation in a profile of a spectrum of an optical signal being transmitted can be prevented. As a result, a variation in transmission quality of an optical signal associated with a variation in a bandwidth of a client signal can be prevented.

(C) in Fig. 9 is an example of a spectrum of a WDM signal when inactive line interfaces (the lines (5) to (8)) do not output an optical signal. An optical repeater in the submarine cable 40 operates in such a way as to maintain total power of an optical signal being transmitted. Thus, in (C) in Fig. 9, a change in gain tilt of a transmission line may cause a variation in transmission quality of a WDM signal, particularly in long-distance transmission using an optical repeater.

According to the present example embodiment, an optical carrier modulated with a dummy pattern maintains a profile of an optical signal similarly to that at a time of transmission of a client signal. For example, a dummy signal is set in such a way that a modulated optical signal has the same optical output and the same transmission speed as those at a time of transmission of a client signal. PTL 1 describes that a monitoring signal or monitoring light is sent to a transmission line in an interface from which an L1 link is deleted. However, since the monitoring signal in PTL 1 is a low-speed signal and the monitoring light is continuous light, a profile of an optical signal before deletion of a link cannot be maintained. Accordingly, a configuration in PTL 1 may deteriorate transmission quality of a WDM signal associated with deletion of a link.

In this way, the transponder 11 can prevent influence on transmission quality of an optical signal due to an increase and a decrease in a bandwidth of a client signal, while reducing power consumption of the line interfaces 201 to 208. The reason is that an optical signal modulated with a dummy signal is output from an inactive line interface, and a profile of the optical signal is maintained.

Further, when any of the line interfaces 201 to 208 is failed, the transponder 11 may inactivate the failed line interface and may activate another inactive line interface. With this, a redundant configuration of a line interface can be achieved and reliability of the submarine cable system 1000 is improved.

### (Third Example Embodiment)

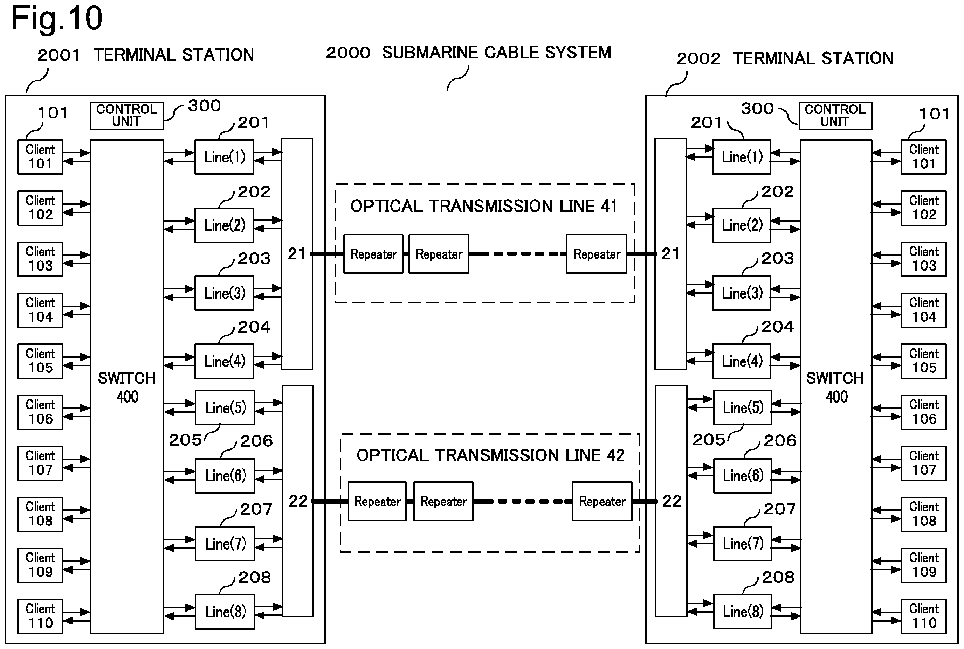

Fig. 10 is a block diagram illustrating a configuration example of a submarine cable system 2000 according to a third example embodiment of the present invention. In the submarine cable system 2000, two optical transmission lines 41 and 42 are present between opposing terminal stations 2001 and 2002, and four line interfaces are oppositely connected with each of the optical transmission lines 41 and 42. The optical transmission lines 41 and 42 includes a repeater. A multiplexing/demultiplexing unit 21 performs multiplexing/demultiplexing of an optical signal transmitted and received by line interfaces 201 to 204, and a multiplexing/demultiplexing unit 22 performs multiplexing/demultiplexing of an optical signal transmitted and received by line interfaces 205 to 208.

The terminal stations 2001 and 2002 according to the present example embodiment have line interfaces assigned to a plurality of paths, and, thereby, when a fault occurs in one path, can continue transmission of a client signal by using a line interface connected with another path. For example, upon occurrence of a fault in the optical transmission line 41, a control unit 300 of the terminal station 2001 changes an active state of the line interfaces 205 to 208 in such a way as to ensure a bandwidth that can further transmit a client signal being transmitted by the line interfaces 201 to 204. Then, the control unit 300 changes a setting for a switch 400 and sets the line interfaces 201 to 204 into an inactive state.

The submarine cable system 2000 assigns, to the optical transmission line 41 and the optical transmission line 42, an optical signal transmitted and received by the line interfaces 201 to 208. As a result, even when one optical transmission line becomes unable to communicate, transmission of a client signal can be continued by increasing the number of active line interfaces connected with the other optical transmission line.

### (Fourth Example Embodiment)

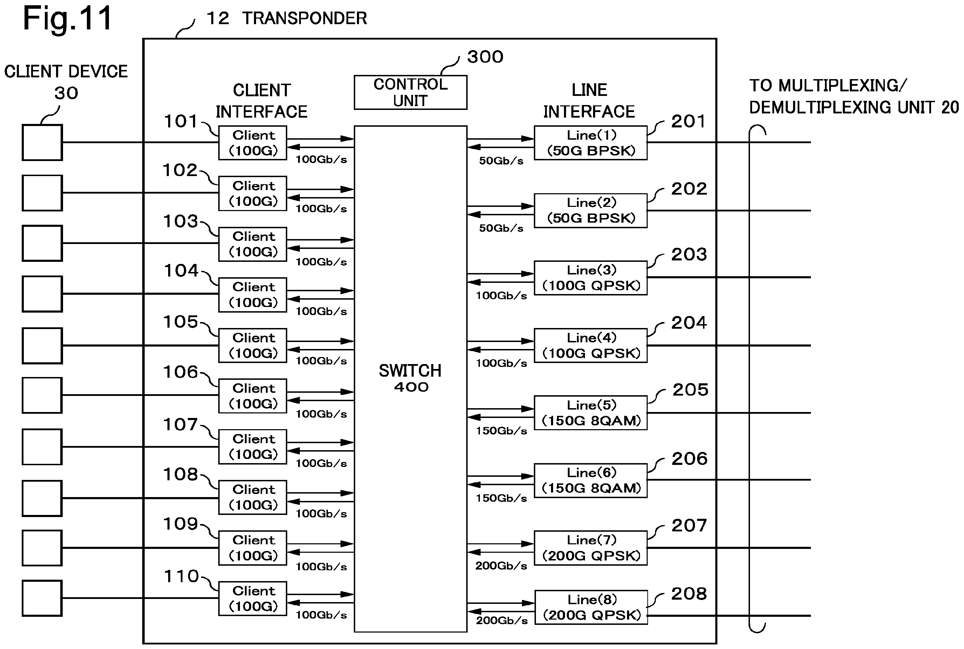

Fig. 11 is a block diagram illustrating a configuration example of a transponder 12 according to a fourth example embodiment of the present invention. According to the present example embodiment, a specific bandwidth is set for client interfaces 101 to 110 and line interfaces 201 to 208. Hereinafter, a setting example of activation and inactivation of the line interfaces 201 to 208 in the transponder 12 will be described. The transponder 12 having an identical configuration is equipped in opposing terminal stations 1001 and 1002 instead of the transponder 10 illustrated in Fig. 1.

In Fig. 11, the client interfaces 101 to 110 are 100 Gigabit Ethernet (GbE) interfaces, and all have a data transmission capability of 100 gigabits per second (Gb/s). The line interfaces 201 and 202 each have a data transmission capability of 50 Gb/s by binary phase shift keying (BPSK) modulation. The line interfaces 203 and 204 each have a data transmission capability of 100 Gb/s by QPSK modulation. The line interfaces 205 and 206 each have a data transmission capability of 150 Gb/s by 8-quadrature amplitude modulation (8QAM). The line interfaces 207 and 208 each have a data transmission capability of 200 Gb/s by 16QAM modulation. A polarization-division multiplexing scheme may be used in combination in any of modulation schemes.

The transponder 12 includes a switch 400 arranged between the client interfaces 101 to 110 and the line interfaces 201 to 208, similarly to the transponder 11 described earlier.

A control unit 300 selects a line interface to be set into an active state in such a way that a total of bandwidths that can be processed by line interfaces is equal to or more than a total bandwidth of client signals. Further, by selecting a line interface in such a way that the number of line interfaces to be set into an active state is minimized, power consumption of all line interfaces can be further reduced.

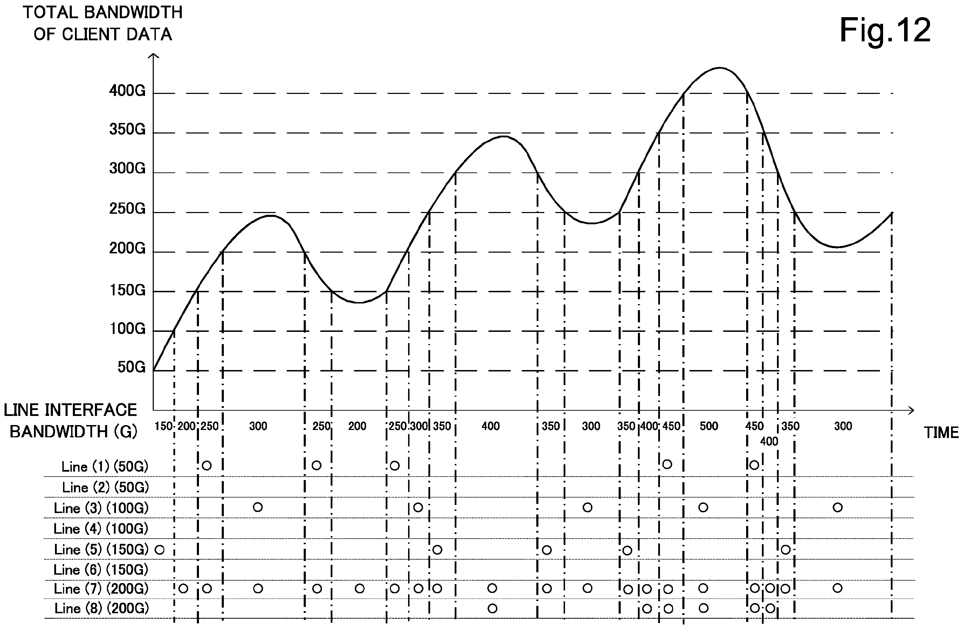

Fig. 12 is a diagram illustrating a selection example of a line interface to be activated in the transponder 12 in Fig. 11. A curved line indicates a temporal variation in a total bandwidth of client signals. A horizontal axis indicates time and a bandwidth that can be processed by a line interface in an active state at the time. A vertical axis indicates a total bandwidth of client signals. A circle mark indicates the line interfaces 201 to 208 (lines (1) to (8)) set into an active state at the time.

The control unit 300 of the terminal station 1001 selects, based on a total bandwidth of client signals acquired from the client interfaces 101 to 110, a line interface to be activated from among the line interfaces 201 to 208. Then, the control unit 300 activates the selected line interface, and notifies an opposite station (the terminal station 1002) of "line activate request information" based on a selection result. As a result, a line interface of the transponder 12 is active also in the terminal station 1002 with a configuration and a bandwidth similar to those in the terminal station 1001.

In Fig. 12, first, a total bandwidth of client signals exceeds 50G (50 Gb/s), and thus, the control unit 300 activates the line interface 205 (the line (5)) having a bandwidth of 150G. Thereafter, with an increase in a total bandwidth of client signals, the control unit 300 switches a line interface to be activated to the line (7) (total bandwidth 200 Gb/s), to the line (1) + the line (7) (total bandwidth 250 Gb/s), and to the line (3) + the line (7) (total bandwidth 300 Gb/s). Further, when a total bandwidth of client signals exceeds 350G, a client interface can ensure a bandwidth of 500 Gb/s by activating the line (3), the line (7), and the line (8). By ensuring a capacity more than a total bandwidth of client signals by a client interface, a bandwidth of a client interface can be prevented from being immediately strained when a total bandwidth of client signals sharply increases.

In this way, by selecting a line interface to be set into an active state according to a total bandwidth of client signals, the number of line interfaces to be activated can be reduced even when a bandwidth of a client signal increases. As a result, power consumption of the transponder 12 can be reduced.

### (Fifth Example Embodiment)

When different types of line interfaces are equipped in a transponder 12 as in the fourth example embodiment, a modulation scheme of an optical transceiver, a form of FEC, and a size of FEC_OH may be changed for each line interface. With this, a WDM signal can be transmitted by a more preferred scheme according to a total bandwidth and transmission quality of a client signal.

For example, for an optical signal in a wavelength band having a good transmission characteristic, a wavelength interval of a WDM signal is narrowed, a size of FEC_OH is reduced, and a data speed is set high. With this, a wide-band client signal can be transmitted.

For an optical signal in a wavelength band having a not-good transmission characteristic, a wavelength interval of a WDM signal is widened and interference between optical carriers is reduced, a size of FEC_OH is enlarged, and a data speed is set low, and thereby error resilience is improved. With this, transmission quality of a client signal can be ensured.

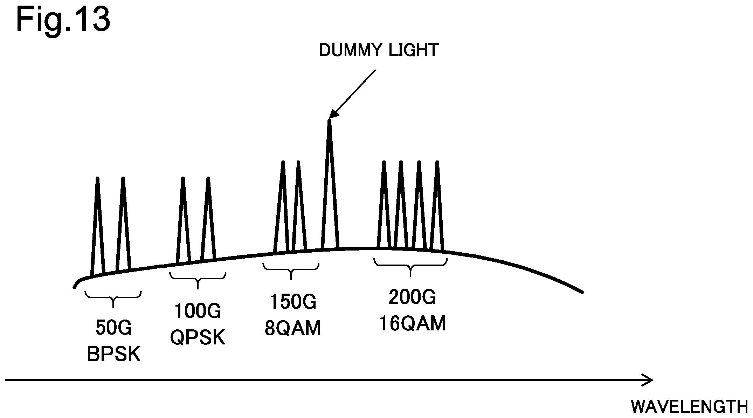

Fig. 13 is a diagram illustrating an example of wavelength arrangement when line interfaces having different transmission schemes are coexistent. Fig. 13 illustrates a case in which a transmission characteristic of an optical signal on a short-wavelength side is relatively bad and a transmission characteristic of an optical signal on a long-wavelength side is relatively good. A line interface having a bandwidth of 50 Gb/s transmits a client signal by BPSK modulation. A line interface having a bandwidth of 100 Gb/s transmits a client signal by QPSK modulation. Similarly, a line interface having a bandwidth of 150 Gb/s and a line interface having a bandwidth of 200 Gb/s transmit a client signal by 8QAM modulation and 16QAM modulation, respectively. A wavelength interval of each of optical signals generated by the line interface having a bandwidth of 50G and the line interface having a bandwidth of 100G is wider than a wavelength interval of each of optical signals generated by the line interface having a bandwidth of 150G and the line interface having a bandwidth of 200G. In this way, by selecting a more appropriate transmission scheme for each line interface, both of high transmission quality and wide-band transmission can be achieved.

Some or all of the functions described in each of the example embodiments may be achieved by executing a program by a central processing unit or the DSP 221 included in the control unit 300 or the line control unit 231. The program is recorded on a fixed, non-transitory recording medium. As the recording medium, a semiconductor memory or a fixed magnetic disk device included in a transponder is used, but is not limited thereto.

Further, the example embodiments of the present invention can be described as, but not limited to, the following supplementary notes.

### (Supplementary note 1)

An optical transponder including:
a client interface that transmits and receives a client signal;
a line interface that includes a signal processing means for performing signal processing for transmitting the client signal by a digital coherent scheme, and an optical transceiver that performs conversion between the client signal and an optical signal; and
a control means for controlling activation of the signal processing means, according to a bandwidth of the client signal.

### (Supplementary note 2)

The optical transponder according to supplementary note 1, wherein
each of a plurality of the line interfaces includes the signal processing means, and
the control means calculates a number of a plurality of the active line interfaces, according to a bandwidth of the client signal, and activates or inactivates each of the signal processing means of a plurality of the line interfaces, according to the number of a plurality of the active line interfaces.

### (Supplementary note 3)

The optical transponder according to supplementary note 2, wherein the control means activates or inactivates each of the signal processing means of a plurality of the line interfaces, according to a bandwidth of the line interface.

### (Supplementary note 4)

The optical transponder according to any one of supplementary notes 1 to 3, wherein
the control means generates information on an active state and an inactive state of each of the signal processing means of the line interface, and information instructing activation and inactivation of a signal processing means included in an opposite station, and
the line interface transmits the generated information to the opposite station.

### (Supplementary note 5)

The optical transponder according to any one of supplementary notes 1 to 4, wherein
the line interface includes:
   an optical transmission means for modulating an optical carrier, according to the client signal being input to the optical transponder, generating the modulated optical carrier, and outputting the modulated optical carrier from the optical transponder; and
   an optical reception means for demodulating an optical signal being input to the optical transponder, and outputting the demodulated client signal from the optical transponder, and
each of the optical transmission means and the optical reception means includes the signal processing means.

### (Supplementary note 6)

The optical transponder according to any one of supplementary notes 1 to 5, wherein
the line interface further includes a dummy pattern generation unit that generates a dummy pattern,
the optical transceiver outputs an optical signal modulated with the dummy pattern when the signal processing means is inactive, and
an optical signal modulated with the dummy pattern includes an optical profile similar to an optical signal modulated with the client signal being input to the optical transponder.

### (Supplementary note 7)

The optical transponder according to any one of supplementary notes 1 to 6, further including a switch that connects between the client interface and the line interface, wherein
the switch connects, in response to an instruction of the control means, between the client interface and a plurality of the line interfaces to be activated, according to a bandwidth of the client signal being input to the optical transponder.

### (Supplementary note 8)

The optical transponder according to supplementary note 7, wherein
the control means generates a connection setting for the switch between the client signal and the line interface, and
the line interface transmits the generated connection setting.

### (Supplementary note 9)

The optical transponder according to supplementary note 7 or 8, wherein
a connection between the client interface and the line interface at the switch is set by a port-based virtual local area network (VLAN).

### (Supplementary note 10)

A terminal station device including the optical transponder according to any one of supplementary notes 1 to 9, and
a multiplexing/demultiplexing means for wavelength-division-multiplexing an optical signal being output by the optical transponder and outputting the wavelength-division multiplexed optical signal to a transmission line, and separating a wavelength-division multiplexed optical signal being input from the transmission line and outputting the separated wavelength-division multiplexed optical signal to the optical transponder.

### (Supplementary note 11)

An optical transmission system including the terminal station device according to supplementary note 10 and the transmission line, wherein
two or more of the terminal station devices are communicably connected with one another via the transmission line.

### (Supplementary note 12)

A control method of an optical transponder, including:
by a client interface, transmitting and receiving a client signal;
by a signal processing means included in a line interface, performing signal processing for transmitting the client signal by a digital coherent scheme;
by an optical transceiver included in the line interface, performing conversion between the client signal and an optical signal; and,
by a control means, controlling activation of the signal processing means, according to a bandwidth of the client signal.

### (Supplementary note 13)

The control method of an optical transponder according to supplementary note 12, further including,
by the control means, calculating a number of a plurality of the active line interfaces, according to a bandwidth of the client signal, and activating or inactivating each of the signal processing means of a plurality of the line interfaces, according to the number of a plurality of the active line interfaces.

### (Supplementary note 14)

The control method of an optical transponder according to supplementary note 13, further including,
by the control means, activating or inactivating each of the signal processing means of a plurality of the line interfaces, according to a bandwidth of the line interface.

### (Supplementary note 15)

The control method of an optical transponder according to any one of supplementary notes 12 to 14, further including:
by the control means, generating information on an active state and an inactive state of each of the signal processing means of the line interface, and information instructing activation and inactivation of a signal processing means included in an opposite station; and,
by the line interface, transmitting the generated information to the opposite station.

### (Supplementary note 16)

The control method of an optical transponder according to any one of supplementary notes 12 to 15, further including:
by an optical transmission means including the signal processing means, modulating an optical carrier, according to the client signal being input to the optical transponder, generating the modulated optical carrier, and outputting the modulated optical carrier from the optical transponder; and,
by an optical reception means including the signal processing means, demodulating an optical signal being input to the optical transponder, and outputting the demodulated client signal from the optical transponder.

### (Supplementary note 17)

The control method of an optical transponder according to any one of supplementary notes 12 to 16, further including,
by the optical transceiver, outputting an optical signal modulated with a dummy pattern when the signal processing means is inactive, wherein
an optical signal modulated with the dummy pattern includes an optical profile similar to an optical signal modulated with the client signal being input to the optical transponder.

### (Supplementary note 18)

The control method of an optical transponder according to any one of supplementary notes 12 to 17, further including,
by a switch that connects between the client interface and the line interface,
connecting, in response to an instruction of the control means, between the client interface and a plurality of the line interfaces to be activated, according to a bandwidth of the client signal being input to the optical transponder.

### (Supplementary note 19)

The control method of an optical transponder according to supplementary note 18, further including:
by the control means, generating a connection setting for the switch between the client signal and the line interface; and,
by the line interface, transmitting the generated connection setting.

### (Supplementary note 20)

The control method of an optical transponder according to supplementary note 18 or 19, further including,
by a port-based virtual local area network (VLAN), setting a connection between the client interface and the line interface at the switch.

### (Supplementary note 21)

A control method of an optical transponder, including:
by a signal processing means, performing signal processing for transmitting and receiving a client signal by a digital coherent scheme;
performing conversion between the client signal and an optical signal; and
controlling activation of the signal processing means, according to a bandwidth of the client signal.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims. In each of the example embodiments, an example in which the present invention is applied to a submarine cable system has been described. However, the present invention can be also applied to a terrestrial optical transmission system.

Further, the configurations described in the example embodiments may not necessarily be mutually exclusive. The function and the effect of the present invention may be achieved by a configuration combining some or all of the above-described example embodiments.

This application is based upon and claims the benefit of priority from Japanese patent application No. 2019-059075, filed on March 26, 2019, the disclosure of which is incorporated herein in its entirety by reference.

### [Reference signs List]

10 to 12Transponder
20 to 22Multiplexing/Demultiplexing unit
30 Client device
40 Submarine cable
41, 42 Optical transmission line
50 Dummy light source
100 to 110 Client interface
200 to 208 Line interface
210 Optical transceiver
220 Signal processing unit
221 DSP
231 Line control unit
232 Transmission signal processing unit
233 Optical modulator
234, 240 Light source
235 Polarization synthesizer
236, 237 Optical amplifier
238 Polarization separator
241 Reception signal processing unit
251 Dummy pattern generation unit
252 Header processing unit
261 Header processing unit
300 Control unit
400 Switch
1000, 2000 Submarine cable system
1001, 1002 Terminal station
2001, 2002 Terminal station

## Claims

1. An optical transponder comprising:
a client interface that transmits and receives a client signal;
a line interface that includes signal processing means for performing signal processing for transmitting the client signal by a digital coherent scheme, and an optical transceiver that performs conversion between the client signal and an optical signal; and
control means for controlling activation of the signal processing means, according to a bandwidth of the client signal.

2. The optical transponder according to claim 1, wherein
each of a plurality of the line interfaces includes the signal processing means, and
the control means calculates a number of active line interfaces, according to a bandwidth of the client signal, and activates or inactivates each of the signal processing means of the plurality of the line interfaces, according to the number of the active line interfaces.

3. The optical transponder according to claim 2, wherein the control means activates or inactivates each of the signal processing means of a plurality of the line interfaces, according to a bandwidth of the line interface.

4. The optical transponder according to any one of claims 1 to 3, wherein
the control means generates information on an active state and an inactive state of each of the signal processing means of the line interface, and information instructing activation and inactivation of signal processing means included in an opposite station, and
the line interface transmits the generated information to the opposite station.

5. The optical transponder according to any one of claims 1 to 4, wherein
the line interface includes:
optical transmission means for modulating an optical carrier, according to the client signal being input to the optical transponder, generating the modulated optical carrier, and outputting the modulated optical carrier from the optical transponder; and
optical reception means for demodulating an optical signal being input to the optical transponder, and outputting the demodulated client signal from the optical transponder, and
each of the optical transmission means and the optical reception means includes the signal processing means.

6. The optical transponder according to any one of claims 1 to 5, wherein
the line interface further includes a dummy pattern generation unit that generates a dummy pattern,
the optical transceiver outputs an optical signal modulated with the dummy pattern when the signal processing means is inactive, and
an optical signal modulated with the dummy pattern includes an optical profile similar to an optical signal modulated with the client signal being input to the optical transponder.

7. The optical transponder according to any one of claims 1 to 6, further comprising a switch that connects between the client interface and the line interface, wherein
the switch connects, in response to an instruction of the control means, between the client interface and a plurality of the line interfaces to be activated, according to a bandwidth of the client signal being input to the optical transponder.

8. The optical transponder according to claim 7, wherein
the control means generates a connection setting for the switch between the client signal and the line interface, and
the line interface transmits the generated connection setting.

9. The optical transponder according to claim 7 or 8, wherein
a connection between the client interface and the line interface at the switch is set by a port-based virtual local area network (VLAN).

10. A terminal station device comprising the optical transponder according to any one of claims 1 to 9, and
multiplexing/demultiplexing means for wavelength-division-multiplexing an optical signal being output by the optical transponder and outputting the wavelength-division multiplexed optical signal to a transmission line, and separating a wavelength-division multiplexed optical signal being input from the transmission line and outputting the separated wavelength-division multiplexed optical signal to the optical transponder.

11. An optical transmission system comprising the terminal station device according to claim 10 and the transmission line, wherein
two or more of the terminal station devices are communicably connected with one another via the transmission line.

12. A control method of an optical transponder, comprising:
by a client interface, transmitting and receiving a client signal;
by signal processing means included in a line interface, performing signal processing for transmitting the client signal by a digital coherent scheme;
by an optical transceiver included in the line interface, performing conversion between the client signal and an optical signal; and,
by control means, controlling activation of the signal processing means, according to a bandwidth of the client signal.

13. The control method of an optical transponder according to claim 12, further comprising,
by the control means, calculating a number of a plurality of the active line interfaces, according to a bandwidth of the client signal, and activating or inactivating each of the signal processing means of a plurality of the line interfaces, according to the number of a plurality of the active line interfaces.

14. The control method of an optical transponder according to claim 13, further comprising,
by the control means, activating or inactivating each of the signal processing means of a plurality of the line interfaces, according to a bandwidth of the line interface.

15. The control method of an optical transponder according to any one of claims 12 to 14, further comprising:
by the control means, generating information on an active state and an inactive state of each of the signal processing means of the line interface, and information instructing activation and inactivation of signal processing means included in an opposite station; and,
by the line interface, transmitting the generated information to the opposite station.

16. The control method of an optical transponder according to any one of claims 12 to 15, further comprising:
by optical transmission means including the signal processing means, modulating an optical carrier, according to the client signal being input to the optical transponder, generating the modulated optical carrier, and outputting the modulated optical carrier from the optical transponder; and,
by optical reception means including the signal processing means, demodulating an optical signal being input to the optical transponder, and outputting the demodulated client signal from the optical transponder.

17. The control method of an optical transponder according to any one of claims 12 to 16, further comprising,
by the optical transceiver, outputting an optical signal modulated with a dummy pattern when the signal processing means is inactive, wherein
an optical signal modulated with the dummy pattern includes an optical profile similar to an optical signal modulated with the client signal being input to the optical transponder.

18. The control method of an optical transponder according to any one of claims 12 to 17, further comprising,
by a switch that connects between the client interface and the line interface,
connecting, in response to an instruction of the control means, between the client interface and a plurality of the line interfaces to be activated, according to a bandwidth of the client signal being input to the optical transponder.

19. The control method of an optical transponder according to claim 18, further comprising:
by the control means, generating a connection setting for the switch between the client signal and the line interface; and,
by the line interface, transmitting the generated connection setting.

20. The control method of an optical transponder according to claim 18 or 19, further comprising,
by a port-based virtual local area network (VLAN), setting a connection between the client interface and the line interface at the switch.

21. A control method of an optical transponder, comprising:
by signal processing means, performing signal processing for transmitting and receiving a client signal by a digital coherent scheme;
performing conversion between the client signal and an optical signal; and
controlling activation of the signal processing means, according to a bandwidth of the client signal.
